# FASCICULE DE BREVET EUROPEEN

(11) **EP 4 211 013 B1**
(45) Date de publication et mention de la délivrance du brevet: **30.10.2024**
(21) Numéro de dépôt: 21782444.0
(22) Date de dépôt: 10.09.2021
(51) Int. Cl.: B61K 9/10, B61L 23/04, G01N 29/04

(54) **DISPOSITIF ET PROCÉDÉ DE GESTION DE RESSOURCES POUR LA SURVEILLANCE DE STRUCTURES ALLONGÉES**
VORRICHTUNG UND VERFAHREN FÜR RESOURCENEINTEILUNG BEI DER ÜBERWACHUNG VON LÄNGLICHEN STRUKTUREN
RESOURCES MANAGEMENT DEVICE AND METHOD FOR MONITORING ELONGATED STRUCTURES

(30) Priorité: 11.09.2020 FR 2009236
(43) Date de publication de la demande: 19.07.2023
(73) Titulaire: Commissariat à l'Energie Atomique et aux Energies Alternatives, 75015 Paris (FR)
(72) Inventeur: CHAPUIS, Bastien, 73100 TRESSERVE (FR); ALBERTINI, Julien, 75017 PARIS (FR)
(74) Mandataire: Atout PI Laplace
(86) Numéro de dépôt international: PCT/EP2021/074936
(87) Numéro de publication internationale: WO 2022/053614

(56) Documents cités:
- FR-A1- 3 064 968
- FR-A1- 3 084 748
- GB-A- 2 372 669

## Description

### Domaine de l'invention

L'invention concerne le domaine de la surveillance de structure allongée pouvant faire office de guide d'ondes élastiques, et concerne en particulier la gestion de ressources énergétiques dédiées à la surveillance de telles structures allongées.

### Etat de la Technique

FR 3 084 748 A1 concerne le domaine de la métrologie et en particulier celui du contrôle non destructif de santé de structures élongées.

Dans le secteur ferroviaire, le rail est une structure allongée dont il faut surveiller l'intégrité. Soumis à des sollicitations thermomécaniques très fortes (e.g. contraintes internes à cause de la dilatation thermique contrariée, passage des trains), les portions de rail s'usent au fur et à mesure du temps et peuvent parfois être sujets à des casses franches. L'état des voies doit être surveillé pour diminuer voire supprimer les risques de déraillement. L'entretien d'un réseau ferroviaire représente un enjeu majeur en termes de coût et de sécurité pour les opérateurs ferroviaires.

Plusieurs approches déjà mises en oeuvre sont connues pour surveiller l'intégrité des rails :
La détection des casses s'effectue actuellement par un système appelé « circuit de voie » qui consiste à faire circuler un faible courant électrique dans les rails. Lorsqu'un train s'engage dans une portion donnée, son essieu court-circuite les deux rails. Ce système permet ainsi de s'assurer que la voie est libre, qu'il n'y a pas un wagon perdu qui a été perdu par un train qui précède, et donc que le train peut s'engager dans la portion. Incidemment, ce système détecte une partie des casses de rails (lorsque la discontinuité électrique est suffisamment importante), mais pas forcément toutes. Cette approche circuit de voie pour la détection d'essieux est toutefois en cours d'abandon au profit d'un système appelé « compteur d'essieux » qui compare le nombre d'essieux entrant dans la portion et ceux qui en sortent. Mais la fonction détection de casse n'est pas couverte par ce nouveau système.

La détection de défauts plus précoces, type fissure, se fait à l'aide d'appareils de contrôle, visuels et par ultrasons, voire électromagnétiques, embarqués sur un train de maintenance qui circule le long des voies tel que décrit dans la demande US 2015/0068296 A1. Pour des questions de performance de détection, ce train ne peut pas circuler aux vitesses commerciales mais plus lentement, ce qui cause nécessairement une gêne voire une interruption de trafic. Cette approche comporte au moins deux inconvénients :
- Vu le nombre de kilomètres à contrôler sur le réseau ferroviaire, chaque portion est alors contrôlée très peu souvent, et donc il y a un risque de casse avant que l'amorce ne soit détectée ; et
- Les techniques embarquées n'ont généralement accès qu'à la surface du rail, et ne peuvent donc contrôler que la partie supérieure du rail (i.e. le champignon).

Une autre approche connue pour surveiller l'état des rails est une approche basée sur l'analyse de signaux issus d'ondes élastiques guidées, le rail étant alors un guide d'ondes élastiques. Cette solution consiste à disposer le long du rail, des transducteurs (un transducteur pouvant aussi être désigné par le terme « capteur ») qui émettent des ondes élastiques guidées dans les rails, lesquelles ondes interagissant avec des défauts (rupture ou autre défaut plus mineur) génèrent un signal diffracté qui est analysé par un logiciel spécialisé implémenté dans un dispositif électronique (aussi désigné comme « noeud » électronique au sens de « hub » mutualisant des ressources électroniques), l'ensemble des dispositifs électroniques constituant un réseau de noeuds configurés pour détecter et localiser un défaut. Un système de surveillance d'une voie ferrée peut comprendre une pluralité de noeuds électroniques répartis en réseau sur les rails, chaque noeud pouvant être associé à un ou plusieurs transducteurs, et faisant une analyse locale des signaux qu'il reçoit, grâce à un logiciel d'analyse embarqué. Les résultats des analyses des noeuds électroniques peuvent être communiqués, en général par une technologie de communication sans fil, à un serveur distant pour permettre une analyse plus globale.

Par ailleurs, un système de surveillance de rails dépend fortement de la topologie de la voie : la longueur des rails, leurs géométries, la présence de système(s) de télécommunication, la fréquence de passage des trains, ... Les systèmes connus sont développés et ajustés à l'environnement dans lequel ils sont installés. Pour toute nouvelle installation, une nouvelle phase d'étude doit être menée pour adapter l'architecture du système au nouvel environnement, quelle que soit la technologie de surveillance retenue, entraînant des coûts importants de redesign. Il n'existe actuellement pas de système générique qui soit adaptable directement à un nouvel environnement.

Aussi, au vu des différentes limites des solutions existantes, il existe le besoin d'une solution qui pallie les inconvénients précités.

### Résumé de l'invention

La présente invention peut être utilisée pour la surveillance de câbles, tuyaux ou toute autre structure allongée, c'est-à-dire possédant une direction privilégiée, pouvant faire office de guide d'ondes élastiques, pour lesquelles la technique de surveillance est basée sur l'analyse d'ondes élastiques. L'analyse de la propagation des ondes permet de renseigner sur l'intégrité du guide d'ondes et donc sur la présence ou non de défaut.

Différentes structures industrielles se présentent sous la forme de guides d'ondes élastiques allongés : par exemple un rail dans le domaine ferroviaire ou dans des structures de type portique. Un tuyau transportant un fluide est aussi une structure allongée pour laquelle il peut être critique de s'assurer l'intégrité (notamment dans les domaines pétroliers ou nucléaires). De même l'invention peut s'appliquer pour la surveillance de câbles, par exemple pour les systèmes de transport de passagers (téléphérique ou autre).

Dans un mode de fonctionnement dit « actif », l'analyse s'effectue sur les ondes émises par un transducteur. Dans un mode de fonctionnement dit « passif », l'analyse s'effectue sur les ondes élastiques générées par le passage d'un dispositif mobile sur ou dans ou à proximité de la structure surveillée.

En mode passif, le dispositif mobile sur un rail est généralement un train ou un chariot mobile. Le contact roue-rail va générer les ondes élastiques guidées qui seront analysées. Pour des tuyaux transportant des fluides, le déplacement de robots mobiles circulant pour diverses missions (inspection visuelle par exemple) et munis de roues ou de chenilles pour se mouvoir dans le tuyau, peut être une source d'ondes élastiques pouvant être analysées. Pour des câbles, soit un dispositif de type télécabine se déplace à l'aide de roues sur le câble, soit le câble est tracté et se déplace guidé par exemple par des roues. Dans les deux cas, dans le repère du câble un dispositif mobile parcourt la longueur du câble et est la source d'ondes élastiques se propageant dans le câble.

L'invention a pour objet un dispositif de type noeud électronique installé le long ou à proximité d'un guide d'ondes élastiques, utilisable en particulier dans un système de surveillance de l'état de guides d'ondes allongés basé sur l'analyse de signaux issus d'ondes ultrasonores élastiques guidées, qui optimise la consommation énergétique des ressources utilisées pour l'inspection du guide d'ondes.

Dans une mise en oeuvre générale, le dispositif de l'invention a une architecture électronique modulaire pour laquelle seuls les modules fonctionnels nécessaires à une installation donnée sont activés et rendus opérationnels.

Avantageusement, le dispositif de l'invention qui par construction est générique, est d'application immédiate dans différents environnements, quelle qu'en soit la topologie.

Avantageusement, le dispositif de l'invention a un coût de déploiement inférieur aux solutions connues pour l'application ferroviaire, car il est transposable sans nouvelle phase de conception à différents marchés et différents pays : métros/trains avec des géométries des rails et des topologies de voies différentes ; des longueurs de rails variées ; la présence ou non d'éclisse et autres éléments de voies. Seul le programme d'allocation des ressources est éventuellement à calibrer pour une nouvelle application. Ainsi, un seul dispositif matériel est à produire et à maintenir, ce qui est beaucoup plus simple industriellement et moins coûteux que de devoir produire un nouveau dispositif par marché.

Le dispositif de l'invention présente entre autres avantages :
- De fonctionner en mode actif (avec émission d'ondes guidées par le système) et/ou en mode passif (avec exploitation du bruit généré lors du passage d'un dispositif mobile sur la structure) ;
- De fonctionner en pulse-écho et/ou transmission, offrant une facilité d'interprétation des signaux, de localisation des défauts pour le 1^{er} noeud voisin, d'une portée à un 2^{ème} noeud voisin, une fiabilité de diagnostic si les deux signaux sont utilisés ;
- De supporter différents protocoles de communication : LoRa pour les communications « longue distance - bas débit - faible consommation » / Wifi-Bluetooth pour les communications « courte distance - haut débit - forte consommation », mais aussi la possibilité de communication filaire (ethernet, fibre optique) si la situation l'autorise et le nécessite ;

- D'avoir différentes sources d'alimentation possibles : panneaux solaires, batteries, secteur, récupération d'énergie vibratoire de la structure ;
- De permettre des prises de décision en local ou en déporté sur un serveur distant ;
- De ne pas nécessiter de connexion filaire entre les noeuds : l'insertion d'un noeud électronique dans le réseau est de type « plug and play ».

Avantageusement, le dispositif de l'invention est mis en oeuvre par un procédé de gestion des ressources qui permet une stratégie optimisée de l'utilisation du dispositif en se basant sur ses fonctionnalités multiples afin d'exploiter les ressources, notamment énergétiques, au plus juste. La gestion optimisée des ressources permet notamment de limiter la consommation énergétique du noeud électronique et donc de prolonger la durée d'exploitation du système global sans intervention de maintenance s'il est sur une source d'alimentation autonome (ou batteries/panneaux solaires plus petits/moins chers etc...).

Avantageusement, le dispositif de l'invention comporte un mode dit de secours pour pallier certaines défaillances matérielles (circuit d'émission d'ondes, composants parmi les plus critiques car susceptible de chauffer), ce qui permet de limiter l'interruption de service du système de surveillance. Le dispositif de l'invention étant plus robuste à certaines défaillances matérielles, cela induit une diminution des coûts de maintenance.

Pour obtenir les résultats recherchés, il est proposé un procédé de gestion de ressources pour la surveillance de structure allongée pouvant faire office de guide d'ondes élastiques. Ce procédé est défini dans la revendication 1.

Selon des modes de réalisation alternatifs ou combinés:
- l'étape d'initialiser le dispositif en mode nominal consiste au moins à désactiver les composants de haute tension, le GNSS, et la communication GSM.
- le procédé comprend avant l'étape de basculer le dispositif électronique en mode détection, une étape consistant à déterminer le temps 'Td' s'écoulant entre une augmentation du niveau de bruit moyen dans ladite structure allongée et le passage d'un dispositif mobile à proximité d'un transducteur.
- le procédé comprend une étape consistant à réveiller des dispositifs électroniques voisins dudit dispositif électronique, si le temps 'Td' correspond à une baisse par rapport à une valeur minimum enregistrée.
- l'étape de basculer le dispositif électronique en mode détection comprend une étape consistant à activer les composants de haute tension pour alimenter les amplificateurs assurant l'émission des ondes élastiques et à activer le GNSS pour synchroniser ledit dispositif avec les dispositifs électroniques voisins.
- l'étape de faire une inspection de ladite structure allongée par une analyse locale de signaux issus des ondes élastiques émises, comprend une étape consistant à déterminer si des dispositifs électroniques voisins dudit dispositif électronique reçoivent ou non les ondes émises.
- le procédé comprend des étapes consistant à :
   - envoyer un rapport d'analyse au serveur distant si ledit dispositif émetteur a reçu les ondes émises par les dispositifs électroniques voisins, et revenir dans le mode nominal ; ou
   - envoyer un message d'alarme au serveur distant si ledit dispositif n'a pas reçu d'ondes émises par les dispositifs électroniques voisins, et basculer en mode expertise ou maintenir le mode détection.
- l'étape de transmettre des données de signaux issus d'ondes élastiques émises dans ladite structure allongée au serveur distant, consiste à envoyer les données via une communication GSM ou filaire.
- le procédé comprend de plus une étape consistant à basculer le dispositif électronique en mode nominal après l'envoi des données.
- le procédé comprend une étape consistant à basculer le dispositif électronique du mode nominal au mode détection ou au mode expertise sur requête du serveur distant ou selon une périodicité prédéfinie.
- le procédé comprend une étape consistant à basculer le dispositif électronique du mode nominal ou du mode détection ou du mode expertise en un mode d'autodiagnostic dans lequel ledit dispositif vérifie que l'intégralité des éléments qui le compose (circuits d'émission, de réception, de communication, la batterie) ainsi que les transducteurs qui lui sont reliés, sont fonctionnels.
- le procédé comprend une étape consistant à basculer en mode d'autodiagnostic sur requête du serveur distant.

L'invention couvre aussi un produit programme d'ordinateur comprenant des instructions de code non transitoire permettant d'effectuer les étapes du procédé de l'invention, lorsque le programme est exécuté sur un ordinateur.

L'invention couvre de plus un un système défini dans la revendication 14.

Un objet de l'invention est aussi un système de surveillance de l'état de voies ferrées défini dans la revendication 15.

### Description des figures

D'autres caractéristiques et avantages de l'invention apparaîtront à l'aide de la description qui suit et des figures des dessins annexés dans lesquels :
La [FIG. 1] illustre un contexte d'implémentation du dispositif de l'invention pour une application ferroviaire ;
La [FIG. 2] illustre un exemple de structure d'un noeud électronique selon l'invention ;
La [FIG. 3] illustre différents états d'un noeud selon un mode de réalisation;
La [FIG. 4] illustre plus en détail le mode nominal d'un noeud selon l'invention
La [FIG. 5] illustre un rail équipé de transducteurs pour mesurer des signaux au passage d'un train ;
La [FIG. 6] illustre des signaux mesurés par les transducteurs de la figure 5;
La [FIG. 7a] illustre un signal mesuré au niveau d'un transducteur proche d'une éclisse ;
La [FIG. 7b] est un zoom du signal de la figure 7a avant et après l'éclisse ;
La [FIG. 8a] illustre un signal mesuré au niveau d'un transducteur plus éloigné d'une éclisse ;
La [FIG. 8b] est un zoom du signal de la figure 8a avant et après l'éclisse ;
La [FIG. 9] illustre plus en détail le mode détection d'un noeud selon l'invention
La [FIG. 10] illustre plus en détail le mode expertise d'un noeud selon l'invention;
La [FIG. 11] illustre plus en détail le mode détection de secours pour un noeud défaillant selon un mode de réalisation ; et
La [FIG. 12] est un tableau récapitulatif des différents modes activables d'un noeud.

### Description détaillée

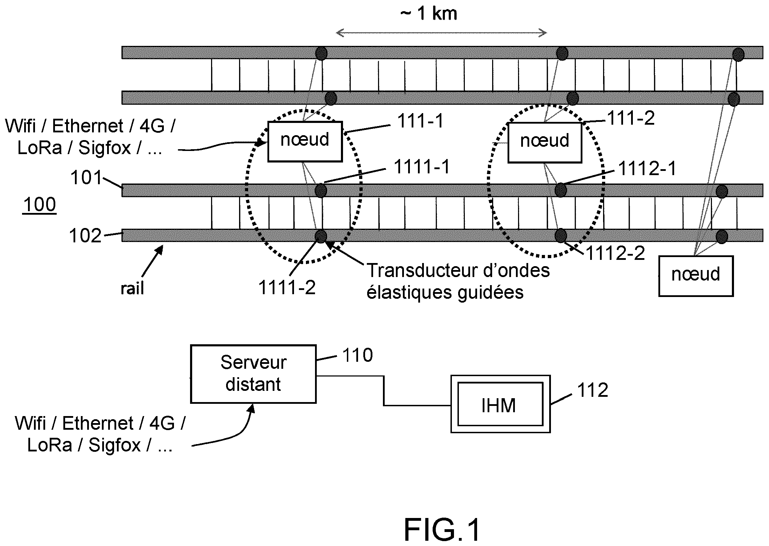

La figure 1 illustre un contexte d'implémentation du dispositif de l'invention pour une application ferroviaire. Cependant, cet exemple est non limitatif et l'homme du métier pourra adapter l'implémentation décrite à toute autre application mettant en oeuvre un guide d'ondes allongé et un dispositif mobile se déplaçant le long du guide d'onde. Dans l'exemple décrit, le guide d'ondes est un rail et le dispositif mobile est un train.

La figure 1 montre les rails 101, 102 d'une voie ferrée 100 équipés de transducteurs d'ondes élastiques 1111-1, 1112-1, 1111-2, 1112-2.

Le terme « équipés » signifie que les transducteurs peuvent se trouver sur un ou plusieurs emplacements sélectionnés parmi : sous le champignon que ce soit sur l'âme interne du rail et/ou sur l'âme externe du rail, sous le rail. Dans l'exemple illustré, deux transducteurs (1111-1, 1111-2) sont disposés respectivement sur un des deux rails 101, 102 à proximité d'un premier noeud électronique 111-1, et deux transducteurs (1112-1,12112-2) sont disposés respectivement sur un des deux rails 101, 102 à proximité d'un second noeud électronique 111-2.

L'homme du métier comprend que l'exemple est pris pour décrire les principes de l'invention mais n'est pas limitatif quant au nombre de transducteurs, de noeuds pouvant être déployés et la distance entre les noeuds. Par exemple, des noeuds électroniques peuvent être installés tous les kilomètres le long d'une voie ferrée.

Bien que non décrit, des transducteurs peuvent aussi être disposés sur les rails d'une seconde voie ferrée pour la circulation de trains dans l'autre sens, ces transducteurs pouvant être couplés aux mêmes noeuds électroniques que la première voie ferrée.

Un transducteur est un dispositif convertissant un signal physique en un autre. Il existe une grande variété de transducteurs. Pour la génération et la réception d'ondes élastiques se transmettant dans un matériau (un rail, un tube, une structure, etc), l'utilisation d'un transducteur acoustique électromagnétique (en anglais « ElectroMagneto-Acoustic Transducer », acronyme EMAT) peut constituer une alternative à l'utilisation d'un transducteur piézoélectrique (acronyme PZT).

L'homme du métier comprend que l'expression « ondes élastiques » utilisée dans la description désigne plus généralement des ondes ultrasonores (littéralement au-dessus de 20 kHz fréquence audible) élastiques (qui se propagent dans un milieu solide) guidées (la propagation n'est pas libre mais forcée par la géométrie du rail).

Chaque noeud électronique installé le long d'une voie ferrée est configuré, i.e. comprend au moins un module logiciel d'analyse d'ondes élastiques, pour analyser des signaux issus des transducteurs afin de déterminer l'existence de défaut dans les rails. Différents types d'ondes élastiques se propagent entre deux transducteurs 1111-1 et 1112-1. Chaque transducteur peut fonctionner à la fois comme émetteur et comme récepteur. Plusieurs signaux sont alors exploitables, ces signaux correspondants à : une onde transmise de l'émetteur au récepteur et inversement, ainsi qu'une onde réfléchie lorsqu'un émetteur fonctionne en pulse-écho (le même transducteur jouant le rôle d'émetteur et de récepteur). Ainsi, la présence et/ou l'absence d'onde transmise et/ou réfléchie renseigne sur la présence ou non de défaut localement.

Les noeuds électroniques sont configurés pour communiquer avec un serveur distant 110, des messages informant de la présence ou non de défaut dans la portion de rail considérée. Les résultats d'analyse peuvent être affichés sur une interface IHM 112 dans une forme directement exploitable par l'utilisateur, indiquant visuellement sur une carte de la voie par exemple la localisation du/des défaut(s), ou dans toute autre forme adaptée à l'application. Une alerte peut être envoyée aux conducteurs de trains et/ou à tout système de régulation du trafic, et/ou une commande de freinage peut être déclenchée en fonction du résultat de l'analyse.

La communication de messages entre les noeuds électroniques et le serveur distant peut être établie selon différents protocoles de communication courte ou longue portée, bas ou haut débit, pouvant mettre en oeuvre différentes technologies filaires ou sans fil, comme les technologies 3G, 4G, 5G, Wifi, Ethernet, fibre optique, LoRa, Sigfox, etc.

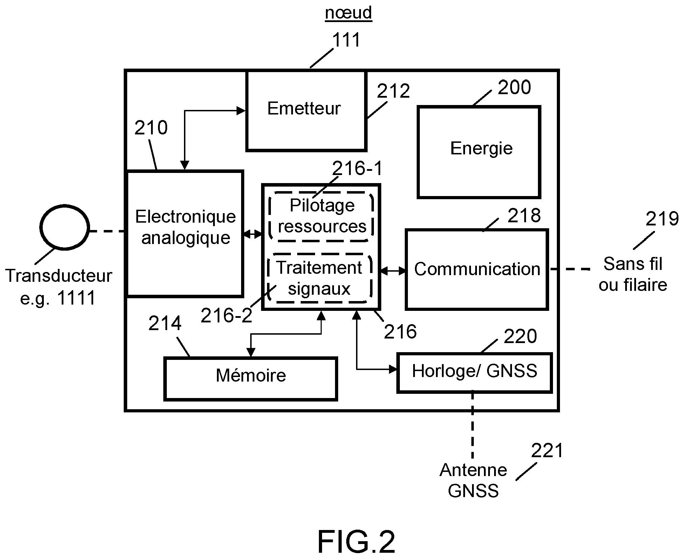

La figure 2 illustre un exemple de structure d'un noeud électronique 111 dans un mode de réalisation permettant de mettre en oeuvre le procédé de pilotage des ressources selon l'invention.

Généralement, un noeud 111 comprend : une source d'énergie 200 (e.g. alimentation électrique de type batterie, panneaux solaires, accès à une alimentation externe, etc.) ; un circuit électronique comprenant un circuit 210 de mesure d'ondes élastiques ; un circuit émetteur 212 d'émission d'ondes élastiques pour le mode actif (en mode passif, l'émetteur n'est pas utilisé car l'énergie du train est utilisée comme source d'ondes élastiques) ; des composants 214 de stockage ; un circuit de calcul 216 associé à des ressources de calcul et/ou de mémoire locales ou à distance, comprenant un module pour le pilotage des ressources et un module pour le traitement des signaux (FPGA, CPU ou autre pour le traitement des signaux reçus) ; un circuit 218 de communication sans fil ou filaire ; un récepteur GNSS (Géolocalisation et Navigation par un Système de Satellites) 220, par exemple de type GPS incluant une antenne 221 et l'électronique embarquée. Le circuit GNSS est avantageux pour repérer la position du noeud une fois disposé sur la voie, mais également pour dater les signaux précisément (une datation précise à quelques nanosecondes permet une synchronisation en post-traitement).

Un noeud 111 est couplé à au moins un transducteur (e.g. 1111) d'ondes élastiques guidées, qui est par exemple installé sur un rail à proximité du noeud.

La source d'énergie 200 peut être fournie par des systèmes dynamos ou capacitifs rechargés par le passage des trains sur la voie ferrée et/ou par un ou plusieurs panneaux photovoltaïques et/ou par un ou plusieurs mâts éoliens et/ou une ou plusieurs batteries et/ou une alimentation secteur, à titre d'exemples non limitatifs.

Le circuit de communication sans fil 218 comprend des ressources appropriées pour établir différents modes de communication : mode de communication longue portée faible débit (e.g. LoRa, Sigfox , ...) ; mode de communication courte portée haut débit (e.g. Wifi, Bluetooth, ...).

Dans un mode de réalisation, le circuit de communication sans fil 218 est configuré pour transmettre des messages de diagnostic de défaut selon le protocole de communication longue portée faible débit LoRa, ainsi que des composants appropriés et antenne associée pour recevoir selon le protocole courte portée haut débit WiFi des données de mise à jour logicielle.

Le circuit GNSS 220 peut être partagé entre plusieurs transducteurs. Un système de positionnement par satellites, dit GNSS (pour Géolocalisation et Navigation par un Système de Satellites), repose sur une constellation de satellites artificiels permettant de fournir à un utilisateur ou un circuit (par l'intermédiaire d'un récepteur portable) sa position, sa vitesse et l'heure. Dans un mode de réalisation, les circuits GNSS sont associés avec les transducteurs de manière à horodater précisément les signaux mesurés par les transducteurs, tout en garantissant une synchronisation inférieure à la microseconde entre deux noeuds distants de plusieurs kilomètres (la distance n'importe pas tant qu'il existe une couverture par GNSS sur les deux noeuds considérés). Dans certains modes de réalisation, les circuits d'horodatage et/ou les circuits de calcul et/ou les circuits GNSS peuvent être diversement distribués dans l'espace (e.g. existence de centres, système entièrement distribué, arrangement hiérarchique entre noeuds).

Le circuit de calcul 216 comprend un module de traitement du signal 216-1 qui permet à partir de signaux émanant des ondes élastiques reçus des noeuds voisins proches, de faire un diagnostic local via un logiciel d'analyse de défaut embarqué, concernant la présence ou non d'un défaut localement. Le logiciel d'analyse de défaut permet de déterminer ou détecter l'existence d'un ou de plusieurs défauts localement sur une longueur de rail incluant quelques transducteurs, à partir de mesures synchronisées des ondes élastiques se propageant dans le rail.

Un défaut local peut être déterminé - son existence, sa localisation, sa catégorie - par application de seuils prédéfinis, lesdits seuils prédéfinis étant déterminés par référence à un état réel, par exemple par rapport à un état du rail qui est connu comme sain ou par rapport à un état calibré dudit rail, ou par référence à un état simulé du rail.

Un défaut peut être caractérisé, notamment en matière de nature, de taille, d'orientation dans l'espace ou de géométrie, par une analyse d'amplitude et/ou de fréquence et/ou par une analyse de la forme du signal et/ou par une analyse du spectre fréquentiel des signaux de mesure et/ou de la fonction représentative de la réponse impulsionnelle du rail et/ou par l'identification d'un changement de mode de propagation d'au moins une des ondes se propageant dans le rail. Un défaut peut notamment être orienté horizontalement, ou verticalement. En fonction de l'analyse des signaux, la position et la taille peuvent être estimées. Par apprentissage ou par comparaison avec des abaques tirés de modèles mathématiques ou numériques, une caractérisation quantitative peut permettre de déterminer un type de défaut (corrosion, fissure, discontinuité, etc).

La caractérisation d'un défaut peut se faire par diagnostic différencié entre le signal reçu se transmettant via le champignon du rail et celui se transmettant via l'âme du rail. Par exemple si le signal se transmet vers une extrémité du rail et pas de l'autre, il est possible de déterminer approximativement l'étendue du défaut ainsi que sa position dans la section du rail. Dans le cas où aucun signal n'est transmis, il est probable que la rupture du rail est quasi-complète. Pour pallier les incertitudes de diagnostic, avantageusement le dispositif de l'invention permet de remonter tous les diagnostics locaux vers un superviseur (module d'analyse d'un serveur éloigné) qui agrège l'ensemble des informations pour permettre un diagnostic global et une caractérisation précise de défaut.

Chaque noeud n'ayant qu'une information parcellaire sur le système global, le diagnostic local et simplifié réalisé par un noeud peut être transmis au serveur distant 110 où un logiciel de supervision permet d'agréger les données des noeuds afin d'améliorer le diagnostic, et émettre une décision finale. En effet, lorsqu'un noeud ne reçoit pas de signal, ce dernier considère qu'il y a une rupture de rail alors que cela peut provenir de la non- émission du signal par l'émetteur. Aussi, le serveur qui agrège les informations reçues des noeuds, va déterminer l'état dudit noeud émetteur. L'analyse faite au niveau du serveur distant permet ainsi de raffiner la détection de défaut et engendrer de meilleures décisions.

Le circuit de calcul 216 comprend de plus un module ou processeur de pilotage des ressources 216-2 qui est configuré, i.e. comprenant des instructions de code, pour gérer la configuration des ressources utilisées par le noeud électronique en se basant sur ses fonctionnalités multiples, afin d'exploiter au plus juste les ressources, notamment énergétiques. Avantageusement, le module de pilotage des ressources met en oeuvre une stratégie optimisée d'utilisation du noeud qui permet de basculer le noeud d'un mode d'analyse à un autre selon le contexte. Le procédé de pilotage de ressources de l'invention a pour objectif de permettre l'inspection de rails sous une contrainte forte d'autonomie et d'économie d'énergie. Ainsi à tout moment, par une stratégie de surveillance dite « intelligente », le noeud est dans un état ou mode où l'utilisation des ressources est adaptée pour limiter la consommation énergétique.

Dans une implémentation préférentielle, le procédé de l'invention gère trois modes principaux pour un noeud, où chaque mode exploite un type différent d'inspection du rail, allant d'un mode d'inspection le moins poussé mais le plus économe à un mode d'inspection le plus poussé mais le plus consommateur.

Selon une variante de réalisation, le noeud peut être configuré pour avoir au moins un mode supplémentaire dit d'autodiagnostic.

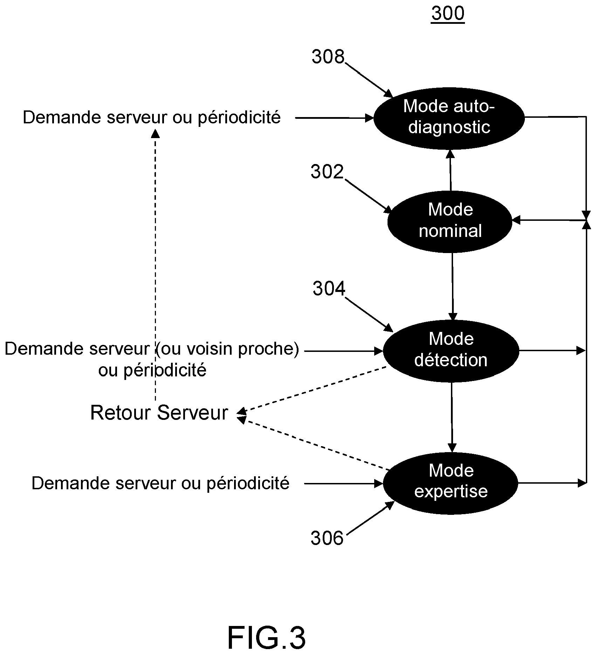

La figure 3 illustre différents états 300 d'un noeud afin de limiter la consommation énergétique tout en permettant une surveillance optimale du rail.

Une activation initiale d'un noeud ou activation en continu correspondant à un état standard peut être un mode « nominal » 302 ou un mode détection 304. Le mode nominal 302 permet une surveillance du rail en limitant fortement la consommation.

Lorsqu'une anomalie est détectée en mode nominal le noeud peut rester en mode nominal ou passer en mode « détection » 304 qui est plus performant dans l'analyse afin de s'assurer de la présence ou non d'un défaut. Le mode détection 304 peut également être activé à la demande du serveur distant ou d'un noeud voisin ou selon une périodicité prédéfinie ou paramétrable. En cas de détection de défaut en mode détection, le noeud peut rester en mode détection ou passer en mode « expertise » 306 qui va consister à provoquer, par la transmission du signal ultrasonore, une analyse plus poussée par le serveur distant ou par un expert afin de confirmer le cas échéant l'envoi d'une alerte. Alternativement, selon les caractéristiques du réseau, l'alerte peut toutefois être envoyée directement quand le noeud est en mode détection. Le mode expertise 306 peut également être activé à la demande du serveur distant ou selon une périodicité prédéfinie ou paramétrable.

Un noeud peut être activé dans un quatrième état ou mode « d'autodiagnostic » 308. Dans ce mode, le noeud vérifie que l'intégralité des éléments qui le compose (circuits d'émission, de réception, de communication, la batterie) ainsi que les transducteurs qui lui sont reliés, sont fonctionnels. Le mode d'autodiagnostic 308 peut être activé à la demande du serveur distant, en réponse à une requête d'un noeud ayant remonté un défaut, quel que soit le mode en cours (détection ou expertise). C'est le cas par exemple, si un noeud voisin d'un noeud émetteur n'a pas reçu un signal supposé être émis par ce dernier, alors il y a lieu de vérifier que cela n'est pas dû à la défaillance du noeud émetteur mais dû à un défaut du rail. Le serveur envoi alors une commande d'activation du mode d'autodiagnostic vers le nœud émetteur. Le mode d'autodiagnostic peut aussi être déclenché de manière périodique programmée.

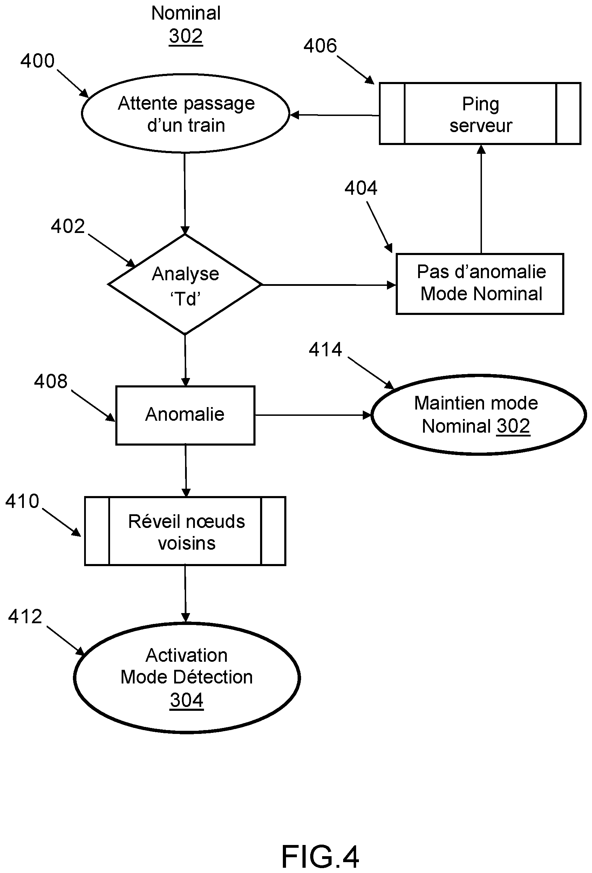

Selon l'invention, la figure 4 illustre plus en détail le mode nominal 302. Lorsque le noeud se trouve dans ce mode, l'inspection du rail est réalisée sans émission d'ondes, et le noeud attend 400 le passage d'un train afin d'analyser les ultrasons générés par le passage du train. Par conséquent dans le mode nominal, la partie haute tension, le GPS ainsi que la communication GSM (3G/4G/5G) sont désactivés. Il s'agit du mode le moins consommateur d'énergie qui permet de limiter significativement l'utilisation des batteries (ou des piles).

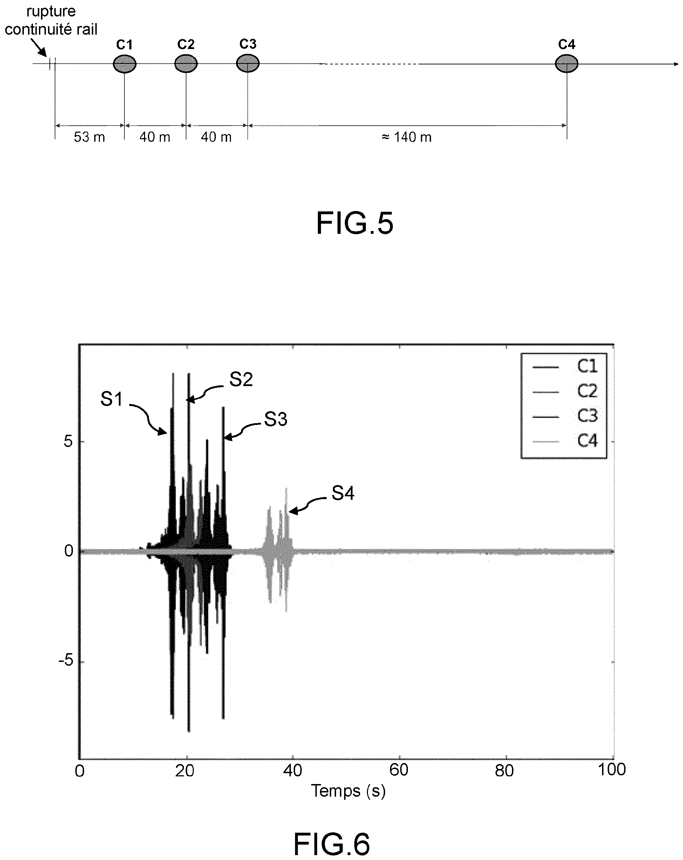

Le mode nominal se base sur une analyse très simple de signaux mesurés au passage d'un train sur une voie équipée de transducteurs comme l'exemple de la figure 5. Un tel exemple de signaux S1 à S4 mesurés par les transducteurs C1 à C4, est présenté sur la figure 6 pour un train composé d'une locomotive et de 2 wagons, roulant à 45 km/h, venant de la gauche et croisant successivement les transducteurs C1, C2, C3 et C4, situés par rapport à l'éclisse selon l'exemple respectivement à 53 mètres pour C1, 93 mètres pour C2, 133 mètres pour C3, 273 mètres pour C4. Le graphique montre la progression du train passant d'un transducteur à un autre par les signaux S1 à S4, ainsi que différents pics correspondants aux passages des différents essieux sur les transducteurs C1 à C4. Globalement le signal croit lorsque le train s'approche d'un transducteur puis décroit une fois qu'il s'en éloigne. L'homme du métier pourra se reporter à la demande de brevet FR3084748 du Demandeur pour une description plus détaillée de l'analyse de tels signaux mesurés au passage d'un train.

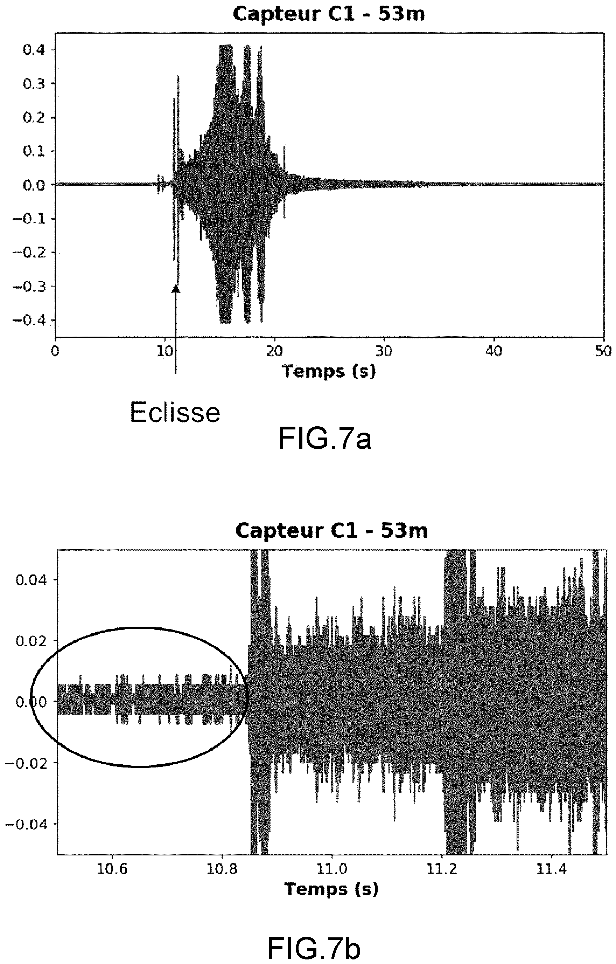

La Figure 7a montre le signal S1 mesuré au niveau du transducteur C1, et la figure 7b est un zoom sur le signal S1 avant et après l'éclisse. Le passage du train au-dessus de l'éclisse se traduit par l'émission d'ondes de fortes amplitudes. De telles ondes ne seraient pas émises lors du passage du train au-dessus d'un défaut réel, car l'écartement entre les 2 rails serait bien inférieur à celui de l'éclisse où il est de quelques millimètres. Par ailleurs, il est observable en regardant la zone entourée en noir sur la figure 7b qui correspond à une période où le train est avant l'éclisse, une modification du niveau de bruit moyen entre le moment où le train est avant l'éclisse et le moment où le train est entre l'éclisse et le transducteur C1.

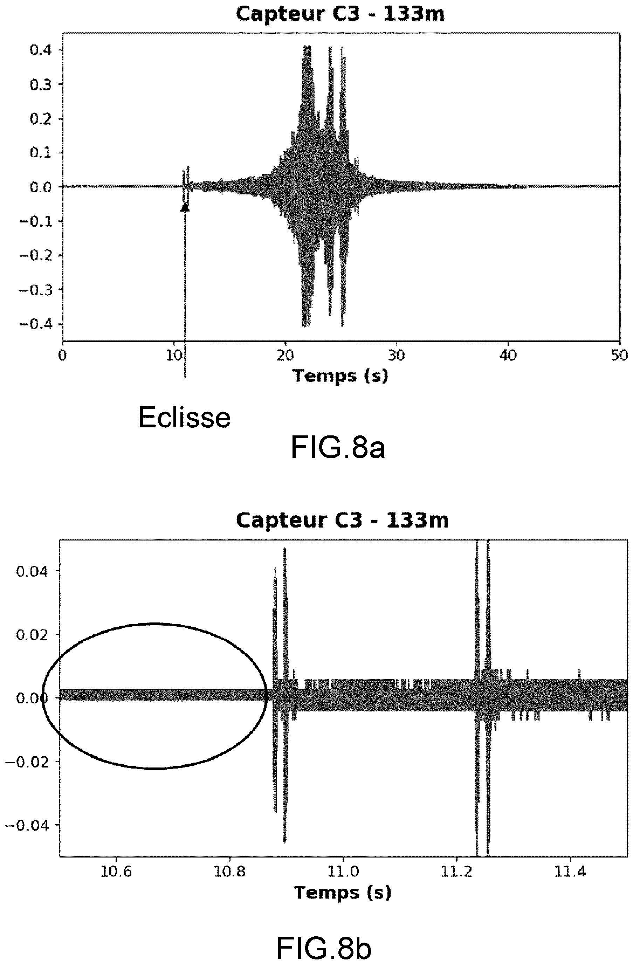

Ces mêmes observations sont aussi faites à titre d'exemple sur les figures 8a et 8b pour le signal S3 issu du transducteur C3 situé à plus grande distance de l'éclisse.

Ces observations révèlent une rupture de continuité mécanique sur rail introduite par l'éclisse, qui stoppe drastiquement la propagation des ondes dans la tête du rail, même si les ondes continuent très probablement à se propager au travers de l'âme du rail via les attaches de l'éclisse. Ainsi, un écartement de quelques centaines de nanomètres suffit à stopper la propagation des ultrasons dans le cas d'un défaut réel.

Avantageusement, la détection d'une anomalie exploite ce phénomène, par la mesure du temps *'Td'* s'écoulant entre une augmentation soudaine du niveau bruit détecté et le passage du train au-dessus d'un transducteur. Sans anomalie, le temps *Td* qui est relié à une distance via la connaissance de la vitesse de propagation des ondes ultrasonores dans le rail, varie peu : soit *Td* est égal au temps correspondant à la distance entre « la dernière éclisse rencontrée par le train avant le capteur » et le capteur, soit *Td* est égal au temps correspondant à « la distance maximale à laquelle le signal est détecté ». Cette distance dépend essentiellement de la sensibilité de la chaine de mesure et notamment du gain appliqué lors de l'acquisition du signal, car en pratique ce sont des signaux amplifiés qui sont analysés afin de détecter des défauts le plus loin possible.

Aussi, si le temps *Td* diminue subitement et fortement par rapport au minimum absolu de *Td* mesuré jusqu'à l'apparition d'une diminution, cela peut-être le signe d'une rupture de continuité mécanique et donc d'une anomalie potentielle du rail.

L'homme de l'art notera que la vitesse de propagation moyenne des ondes, environ 3 km/s, est significativement supérieure aux vitesses de croisière maximales des trains. Aussi, une forte diminution de temps *Td* ne peut donc être due à un train passant plus rapidement que les précédents. Par ailleurs, si un train roule lentement voire s'arrête entre la détection et le passage au niveau du transducteur, alors le temps *Td* va augmenter.

Revenant à la figure 4, selon les principes de l'invention, quand le mode nominal 302 est activé sur un noeud, le procédé permet de passer à une étape 402 d'analyse du temps *Td* uniquement au passage d'un train.

Si le temps *Td* mesuré reste constant par rapport au dernier minimum enregistré, signifiant qu'il n'y a pas d'anomalie détectée lors de ce passage de train, le procédé permet de maintenir 404 le noeud dans son mode nominal, et permet que le noeud envoie 406 à fréquence régulière un message au serveur distant indiquant qu'il est toujours fonctionnel. Dans un mode de réalisation, les messages sont formatés selon la structure de trames LoRa.

Dans un mode de réalisation, un noeud peut lancer un mode d'autodiagnostic et envoyer un rapport sur son état physique à échéance régulière. Dans une implémentation, les messages d'autodiagnostic sont formatés selon la structure de trames LoRa, et sont envoyés 1 fois / jour.

Revenant à l'étape 402, si le temps *Td* mesuré correspond à une baisse subite par rapport à la dernière valeur minimum enregistrée, signifiant qu'une anomalie est détectée 408, le procédé permet dans une étape suivante 410 de réveiller des noeuds voisins (n+1, n-1, voire n-2 et n+2), i.e. activer le mode détection sur les noeuds voisins, afin de pousser l'analyse. Selon des modes de réalisation, le nombre de noeuds voisins réveillés peut varier selon différents paramètres que sont la distance de propagation des ultrasons et la distance entre les noeuds. La communication entre le noeud courant et les noeuds voisins peut être réalisée par une communication LoRa point à point ou éventuellement en transitant via le serveur distant. Dans une étape suivante 412, le procédé active le mode détection du noeud.

Dans un mode de réalisation, le procédé permet 414 de maintenir le noeud courant en mode nominal même en cas de détection d'anomalie.

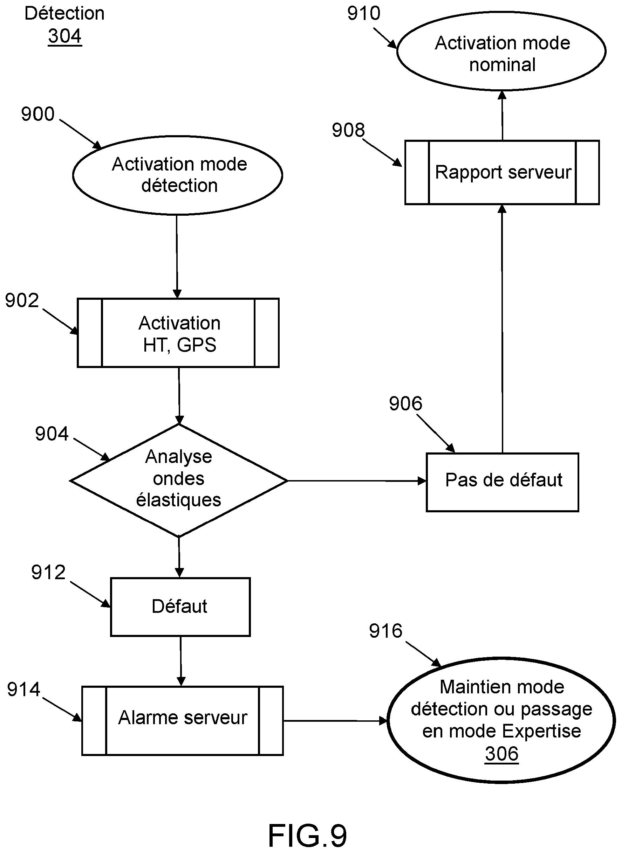

Selon l'invention, la figure 9 illustre plus en détail le mode détection 304 d'un noeud, permettant de détecter une rupture ou un défaut apparent sur le rail. L'activation 900 du mode détection d'un noeud peut être déclenchée à l'initialisation ou suite à la détection d'une anomalie pendant l'analyse des signaux au passage d'un train. Le mode détection peut aussi être déclenché de manière automatique à la demande du serveur, à une périodicité fixée par l'opérateur du réseau, ou suite à une demande ponctuelle via un ordre émis par le serveur.

La fréquence d'inspection en mode détection automatique peut être fixée en fonction de plusieurs paramètres :
- Le coût énergétique d'une telle inspection par rapport à la quantité d'énergie disponible pour le système, notamment en cas d'alimentation autonome ;
- La fréquence de passage des trains : si les trains passent trop peu fréquemment alors le mode nominal pourrait ne pas détecter de défaut ;
- La volonté de renforcer la fiabilité de l'inspection du mode nominal, très basique, par exemple pour des contraintes de démonstration de performances.

Dans le mode détection, l'inspection du rail se fait de manière active, c'est-à-dire par émission d'onde ultrasonore. Le noeud génère une onde guidée le long du rail. Dans ce mode, le procédé permet (étape 902) d'activer le GPS afin de synchroniser les noeuds pour le contrôle, ainsi que la haute tension pour alimenter les amplificateurs assurant l'émission (i.e. le tir) de l'onde acoustique.

Dans une étape suivante 904, le procédé permet de faire l'analyse du tir. Le procédé permet de déterminer si les noeuds voisins qui ont été préalablement réveillés, reçoivent ou non l'onde émise.

En l'absence de rupture de rail, les noeuds voisins reçoivent l'onde émise, signifiant qu'il n'y a pas de défaut 906, et le procédé passe à une étape suivante 908 pour envoyer un rapport d'analyse au serveur distant signifiant que le dispositif émetteur a reçu les ondes émises par les dispositifs électroniques voisins, puis le procédé permet de basculer le noeud courant dans son état nominal 910.

Si les noeuds voisins ne reçoivent rien, cela peut potentiellement indiquer la présence d'une rupture ou d'un défaut critique 912. Le procédé permet dans une étape suivante 914 d'envoyer un message d'alarme au serveur distant si le dispositif émetteur n'a pas reçu d'ondes émises par les dispositifs électroniques voisins, puis permet 916 de basculer en mode expertise 306 ou de maintenir le mode détection 304.

La détection de défaut peut également se faire par le retour d'une onde vers le noeud émetteur (mode pulse écho). Ce retour est caractéristique de la présence soit d'un défaut soit d'une rupture de rail (soit d'une ou plusieurs soudures connues et ignorées).

Lorsqu'un défaut est détecté mais en dessous d'une dimension critique il peut être utile d'archiver le signal correspondant afin de mener des analyses plus poussées et de pouvoir surveiller son évolution au cours du temps.

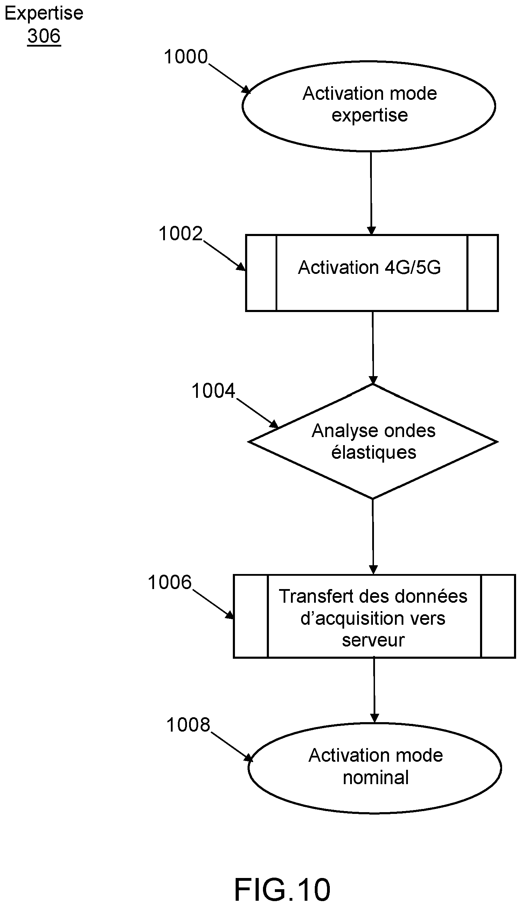

Selon l'invention, la figure 10 illustre plus en détail le mode expertise 306 d'un noeud permettant de conduire une analyse plus poussée lors de la détection d'un défaut par une analyse ultra-sonore 904. L'activation 1000 du mode expertise d'un noeud peut aussi être déclenchée à la demande, pas nécessairement en cas de détection de défaut, par un ordre envoyé via le serveur distant à des noeuds sélectionnés par un expert. Cette fonctionnalité peut être utile par exemple pour garder une traçabilité des signaux mesurés au fur et à mesure de l'exploitation du réseau.

Dans ce mode l'inspection est faite de manière active à l'instar du mode détection. Le procédé permet d'activer 1002 la communication GSM (3G/4G/5G) sur le noeud, et de procéder à une émission d'ondes élastiques (tir ultrasonore) 1004.

Dans une étape suivante 1006, le signal ultrasonore enregistré par le noeud est envoyé au serveur via la communication GSM, puis le noeud retourne à un mode nominal dans une étape suivante 1008.

Une analyse complète des données transférées peut être réalisée par le serveur ou par un expert et non plus au sein du noeud. En cas d'analyse indiquant un défaut critique, une alerte peut être envoyée.

En cas de défaillance du circuit d'émission d'ondes, qui est le circuit le plus critique d'un noeud électronique car il nécessite une haute tension et des grosses quantités d'énergie, le noeud peut basculer dans un mode « détection de secours » pour réaliser une détection par analyse de la réponse impulsionnelle. Dans ce cas, tel que décrit dans la demande FR3084748 du Demandeur, il n'y a pas d'émission d'ondes ultrasonores, la mesure est effectuée au passage d'un train. Ce mode détection de secours nécessite d'envoyer au serveur via l'activation de la communication GSM, les signaux de bruit mesurés au passage des trains par le noeud défaillant et ses plus proches voisins, ce qui est plus coûteux énergétiquement qu'une communication de type LoRa. L'avantage majeur offert par ce mode de détection de secours réside dans le fait de continuer à assurer une surveillance de la portion de rail autour du noeud défaillant pendant une période donnée, et il ne nécessite pas une maintenance immédiate du système voire une interruption du passage des trains si la fonction de détection de casse de rail est sécuritaire.

Dans le mode détection de secours, le serveur se charge de l'analyse des signaux de bruit, puis de la partie prise de décision sur les tronçons de part et d'autre du noeud dont le circuit d'émission est défaillant.

Avantageusement, cette alternative au mode actif peut permettre de prolonger la durée de vie du noeud en cas de défaillance du circuit d'émission d'ondes et ainsi diminuer les coûts de maintenance du système.

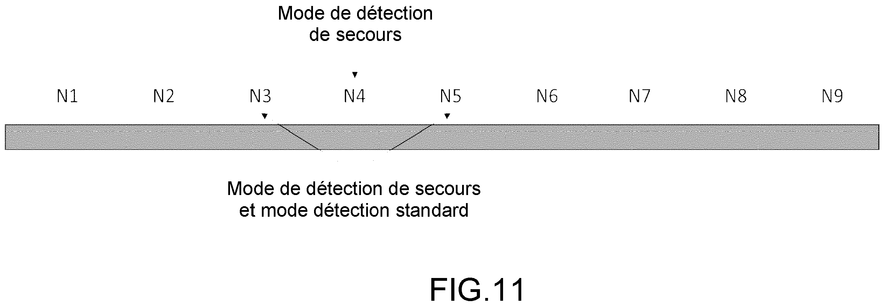

La figure 11 illustre le traitement d'un noeud défaillant. La bascule en mode de détection de secours des noeuds voisins N3 et N5 d'un noeud défaillant N4, peut être effectuée via un ordre envoyé en LoRa par le noeud défaillant N4 en point à point avec ses voisins N3 et N5, ou bien en transitant par le serveur. Les noeuds voisins dont le mode de secours est activé continuent néanmoins d'assurer leur mission de détection en mode détection actif standard pour faire l'interface avec les autres noeuds du réseau. Ainsi, si le noeud défaillant N4 détecte une anomalie en mode nominal, ses voisins basculent en mode détection de secours et attendent le passage d'un train (tout comme le noeud défaillant) pour faire leur analyse. Pour maintenir la compatibilité avec les autres noeuds du réseau (N2 et N6 notamment), les noeuds voisins N3 et N5 continuent toutefois leurs opérations prévues normalement par le mode de détection et saisissent l'opportunité du passage du prochain train pour faire l'analyse conjointe avec le noeud N4 en mode détection de secours.

Il faut noter que pour les noeuds voisins N3 et N5, le mode détection de secours est prioritaire sur le mode de détection standard en cas de passage d'un train. En effet, le bruit généré par le passage du train rend inutilisable l'analyse des signaux en actif. A la fin du passage du train les noeuds N3 et N5 finissent si nécessaire les séquences prévues en mode de détection puis rebasculent en mode nominal.

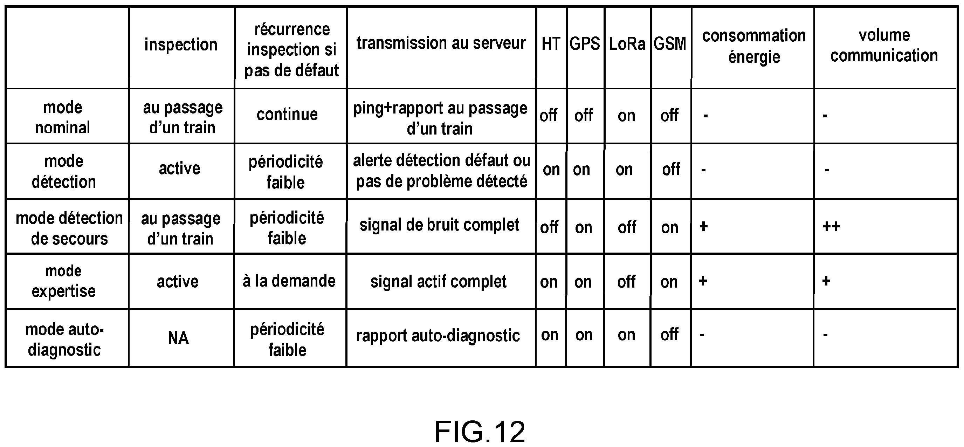

La [FIG. 12] est un tableau récapitulatif de la configuration de différentes fonctions selon le mode activé d'un noeud.

L'invention peut s'implémenter à partir d'éléments matériel et/ou logiciel. Elle peut être disponible en tant que produit programme d'ordinateur sur un support lisible par ordinateur. Le support peut être électronique, magnétique, optique ou électromagnétique. Les moyens ou ressources informatiques peuvent être centralisés et/ou être distribués ("Cloud computing"), éventuellement avec ou selon des technologies de pair-à-pair et/ou de virtualisation et/ou de redondance. Le code logiciel peut être exécuté sur n'importe quel processeur approprié (par exemple, un microprocesseur) ou coeur de processeur ou un ensemble de processeurs, qu'ils soient prévus dans un dispositif de calcul unique ou répartis entre plusieurs dispositifs de calcul. La mise en oeuvre informatique de l'invention peut utiliser des systèmes centralisés (e.g. client-serveur ou maître-esclave) et/ou des systèmes distribués (e.g. architecture de type pair-à-pair utilisant des ressources informatiques accessibles, éventuellement de manière opportuniste e.g. réseaux ad hoc, etc.). Le système (ou ses variantes) implémentant une ou plusieurs des étapes du procédé peut utiliser un ou plusieurs circuits électroniques dédiés ou un circuit à usage général. Le procédé peut aussi être mis en oeuvre sur une machine de calcul reprogrammable (un processeur ou un microcontrôleur, par exemple) exécutant un programme comprenant une séquence d'instructions, ou sur une machine de calcul dédiée (par exemple un ensemble de portes logiques comme un FPGA ou un ASIC, ou tout autre module matériel). Un circuit dédié peut notamment améliorer les performances. La référence à un programme d'ordinateur qui, lorsqu'il est exécuté, effectue l'une quelconque des fonctions décrites précédemment, ne se limite pas à un programme d'application s'exécutant sur un ordinateur hôte unique. Au contraire, les termes programme d'ordinateur et logiciel sont utilisés ici dans un sens général pour faire référence à tout type de code informatique (par exemple un logiciel d'application, un micro logiciel, un microcode, APIs, web services, ou toute autre forme d'instruction d'ordinateur) qui peut être utilisé pour programmer un ou plusieurs processeurs pour mettre en oeuvre des étapes du procédé.

## Revendications

1. Procédé de gestion de ressources pour la surveillance de structure allongée pouvant faire office de guide d'ondes élastiques, la structure étant instrumentée d'une pluralité de transducteurs aptes à acquérir des signaux mesurant des grandeurs caractéristiques d'ondes élastiques se propageant dans la structure, chaque transducteur étant couplé à un dispositif électronique installé le long de la structure, chaque dispositif électronique comprenant au moins des moyens pour traiter les signaux de mesure reçus d'au moins un transducteur et un processeur ayant des instructions de code pour mettre en oeuvre des étapes consistant à :
- initialiser (302) le dispositif électronique en mode nominal, ledit mode nominal permettant d'initier une inspection de la structure allongée par une analyse locale d'ondes élastiques générées lors du passage d'un dispositif mobile à proximité d'un transducteur avec lequel le dispositif électronique est couplé, ou initialiser (304) le dispositif électronique en mode détection, ledit mode détection permettant d'initier par un transducteur avec lequel le dispositif électronique est couplé, une émission d'ondes élastiques dans la structure allongée et faire une inspection de la structure allongée par une analyse locale de signaux issus des ondes élastiques émises ;
- déterminer si une anomalie est détectée lors de l'inspection en mode nominal, et si oui, soit maintenir le mode nominal, soit basculer (304) le dispositif électronique en mode détection pour initier par un transducteur avec lequel le dispositif électronique est couplé, une émission d'ondes élastiques dans la structure allongée et faire une inspection de la structure allongée par une analyse locale de signaux issus des ondes élastiques émises ;
- déterminer si un défaut est détecté lors de l'inspection en mode détection, et si oui, soit maintenir le mode détection, soit basculer (306) le dispositif électronique en mode expertise, ledit mode expertise permettant audit dispositif électronique de transmettre à un serveur distant pour générer une analyse plus poussée, des données de signaux issus d'ondes élastiques émises dans ladite structure lors de l'inspection en mode détection.

2. Procédé selon la revendication 1 dans lequel l'étape d'initialiser le dispositif en mode nominal consiste au moins à désactiver les composants de haute tension, le Global Navigation Satellite System, c.-à-d. GNSS, et la communication GSM.

3. Procédé selon la revendication 1 ou 2 comprenant avant l'étape de basculer le dispositif électronique en mode détection, une étape consistant à déterminer le temps 'Td' s'écoulant entre une augmentation du niveau de bruit moyen dans ladite structure allongée et le passage d'un dispositif mobile à proximité d'un transducteur.

4. Procédé selon la revendication 3 comprenant une étape consistant à réveiller des dispositifs électroniques voisins dudit dispositif électronique, si le temps 'Td' correspond à une baisse par rapport à une valeur minimum enregistrée.

5. Procédé selon l'une quelconque des revendications 1 à 4 dans lequel l'étape de basculer le dispositif électronique en mode détection comprend une étape consistant à activer les composants de haute tension pour alimenter les amplificateurs assurant l'émission des ondes élastiques et à activer le GNSS pour synchroniser ledit dispositif avec les dispositifs électroniques voisins.

6. Procédé selon l'une quelconque des revendications 1 à 5 dans lequel l'étape de faire une inspection de ladite structure allongée par une analyse locale de signaux issus des ondes élastiques émises, comprend une étape consistant à déterminer si des dispositifs électroniques voisins dudit dispositif électronique reçoivent ou non les ondes émises.

7. Procédé selon la revendication 6 comprenant des étapes consistant à :
- envoyer un rapport d'analyse au serveur distant si ledit dispositif émetteur a reçu les ondes émises par les dispositifs électroniques voisins, et revenir dans le mode nominal ; ou
- envoyer un message d'alarme au serveur distant si ledit dispositif n'a pas reçu d'ondes émises par les dispositifs électroniques voisins, et basculer en mode expertise ou maintenir le mode détection.

8. Procédé selon l'une quelconque des revendications 1 à 7 dans lequel l'étape de transmettre des données de signaux issus d'ondes élastiques émises dans ladite structure allongée au serveur distant, consiste à envoyer les données via une communication GSM ou filaire.

9. Procédé selon la revendication 8 comprenant de plus une étape consistant à basculer le dispositif électronique en mode nominal après l'envoi des données.

10. Procédé selon l'une quelconque des revendications1 à 9 comprenant une étape de basculer le dispositif électronique du mode nominal au mode détection ou au mode expertise sur requête du serveur distant ou selon une périodicité prédéfinie.

11. Procédé selon l'une quelconque des revendications 7 ou 8 comprenant une étape de basculer le dispositif électronique du mode nominal ou du mode détection ou du mode expertise en un mode d'autodiagnostic dans lequel ledit dispositif vérifie que l'intégralité des éléments qui le compose (circuits d'émission, de réception, de communication, la batterie) ainsi que les transducteurs qui lui sont reliés, sont fonctionnels.

12. Procédé selon la revendication 11 comprenant une étape consistant à basculer en mode d'autodiagnostic sur requête du serveur distant.

13. Produit programme d'ordinateur, ledit programme d'ordinateur comprenant des instructions de code permettant d'effectuer les étapes du procédé selon l'une quelconque des revendications 1 à 12, lorsque ledit programme est exécuté sur un ordinateur.

14. Système avec un dispositif de gestion de ressources pour la surveillance de structure allongée pouvant faire office de guide d'ondes élastiques, une pluralité de transducteurs (1111-1, 1112-1, 1111-2, 1112-2) et une pluralité de dispositifs électroniques, la structure étant instrumentée de la pluralité de transducteurs aptes à acquérir des signaux mesurant des grandeurs caractéristiques d'ondes élastiques se propageant dans la structure, chaque transducteur étant couplé à un des dispositifs électroniques installé le long de la structure, chaque dispositif électronique comprenant au moins des moyens pour traiter les signaux de mesure reçus d'au moins un transducteur et un processeur ayant des instructions de code pour mettre en oeuvre les étapes du procédé selon l'une quelconque des revendications 1 à 12.

15. Système de surveillance de l'état de voies ferrées comprenant une pluralité des systèmes selon la revendication 14.

## Patentansprüche

1. Verfahren zur Ressourcenverwaltung für die Überwachung einer länglichen Struktur, die als elastischer Wellenleiter dienen kann, wobei die Struktur mit einer Vielzahl von Wandlern ausgestattet ist, die in der Lage sind, Signale zu erfassen, die charakteristische Größen von sich in der Struktur ausbreitenden elastischen Wellen messen, wobei jeder Wandler an eine elektronische Vorrichtung gekoppelt ist, die entlang der Struktur installiert ist, wobei jede elektronische Vorrichtung mindestens Mittel zum Verarbeiten der von mindestens einem Wandler empfangenen Messsignale und einen Prozessor umfasst, der Codebefehle aufweist, um die folgenden Schritte auszuführen:
- Initialisieren (302) der elektronischen Vorrichtung im nominalen Modus, wobei es der nominale Modus ermöglicht, eine Untersuchung der länglichen Struktur durch lokale Analyse von elastischen Wellen zu initiieren, die beim Vorbeiführen einer mobilen Vorrichtung in der Nähe eines Wandlers erzeugt werden, an den die elektronische Vorrichtung gekoppelt ist, oder Initialisieren (304) der elektronischen Vorrichtung im Erkennungsmodus, wobei es der Erkennungsmodus ermöglicht, durch einen Wandler, an den die elektronische Vorrichtung gekoppelt ist, ein Aussenden von elastischen Wellen in der länglichen Struktur zu initiieren und eine Untersuchung der länglichen Struktur durch lokale Analyse von aus den ausgesendeten elastischen Wellen austretenden Signalen vorzunehmen;
- Bestimmen, ob bei der Untersuchung im nominalen Modus eine Anomalie erkannt wird, und wenn dies der Fall ist, entweder Beibehalten des nominalen Modus oder Umschalten (304) der elektronischen Vorrichtung in den Erkennungsmodus, um durch einen Wandler, an den die elektronische Vorrichtung gekoppelt ist, ein Aussenden von elastischen Wellen in der länglichen Struktur zu initiieren und eine Untersuchung der länglichen Struktur durch lokale Analyse von aus den ausgesendeten elastischen Wellen austretenden Signalen vorzunehmen;
- Bestimmen, ob bei der Untersuchung im Erkennungsmodus ein Fehler erkannt wird, und wenn dies der Fall ist, entweder Beibehalten des Erkennungsmodus oder Umschalten (306) der elektronischen Vorrichtung in den Prüfungsmodus, wobei es der Prüfungsmodus der elektronischen Vorrichtung ermöglicht, Daten der aus den bei der Untersuchung im Erkennungsmodus in der Struktur ausgesendeten elastischen Wellen austretenden Signale an einen entfernten Server zu senden, um eine eingehendere Analyse zu erzeugen.

2. Verfahren nach Anspruch 1, wobei der Schritt zum Initialisieren der Vorrichtung im nominalen Modus mindestens aus dem Deaktivieren der Hochspannungskomponenten, des Global Navigation Satellite System, d. h. GNSS, und der GSM-Kommunikation besteht.

3. Verfahren nach Anspruch 1 oder 2, umfassend, vor dem Schritt des Umschaltens der elektronischen Vorrichtung in den Erkennungsmodus, einen Schritt des Bestimmens der Zeit "Td", die zwischen einer Erhöhung des mittleren Rauschpegels in der länglichen Struktur und dem Vorbeiführen einer mobilen Vorrichtung in der Nähe eines Wandlers verstreicht.

4. Verfahren nach Anspruch 3, umfassend einen Schritt des Aktivierens der elektronischen Vorrichtungen in der Nähe der elektronischen Vorrichtung zu aktivieren, wenn die Zeit "Td" einer Verringerung in Bezug auf einen gespeicherten Mindestwert entspricht.

5. Verfahren nach einem der Ansprüche 1 bis 4, wobei der Schritt des Umschaltens der elektronischen Vorrichtung in den Erkennungsmodus einen Schritt des Aktivierens der Hochspannungskomponenten umfasst, um die Verstärker zu speisen, die das Aussenden der elastischen Wellen gewährleisten, und das GNSS zu aktivieren, um die Vorrichtung mit den benachbarten elektronischen Vorrichtungen zu synchronisieren.

6. Verfahren nach einem der Ansprüche 1 bis 5, wobei der Schritt des Vornehmens einer Untersuchung der länglichen Struktur durch lokale Analyse von aus den ausgesendeten elastischen Wellen austretenden Signalen einen Schritt umfasst, der darin besteht zu bestimmen, ob elektronische Vorrichtungen in der Nähe der elektronischen Vorrichtung die ausgesendeten Wellen empfangen oder nicht.

7. Verfahren nach Anspruch 6, umfassend die folgenden Schritte:
- Senden eines Analyseberichts an den entfernten Server, wenn die Sendevorrichtung die von den benachbarten elektronischen Vorrichtungen ausgesendeten Wellen empfangen hat, und Zurückkehren in den nominalen Modus; oder
- Senden einer Alarmnachricht an den entfernten Server, wenn die Vorrichtung keine von den benachbarten elektronischen Vorrichtungen ausgesendeten Wellen empfangen hat, und Umschalten in den Prüfungsmodus oder Beibehalten des Erkennungsmodus.

8. Verfahren nach einem der Ansprüche 1 bis 7, wobei der Schritt des Übertragens von Daten von aus den in der länglichen Struktur ausgesendeten elastischen Wellen austretenden Signalen an den entfernten Server darin besteht, die Daten über eine GSM-oder Kabel-Kommunikation zu senden.

9. Verfahren nach Anspruch 8, ferner umfassend einen Schritt des Umschalten der elektronischen Vorrichtung nach dem Senden der Daten in den nominalen Modus umzuschalten.

10. Verfahren nach einem der Ansprüche 1 bis 9, umfassend einen Schritt des Umschaltens der elektronischen Vorrichtung vom nominalen Modus in den Erkennungsmodus oder in den Prüfungsmodus nach Aufforderung durch den entfernten Server oder gemäß einer vordefinierten Periodizität.

11. Verfahren nach einem der Ansprüche 7 oder 8, umfassend einen Schritt des Umschaltens der elektronischen Vorrichtung vom nominalen Modus oder vom Erkennungsmodus oder vom Prüfungsmodus in einen Autodiagnosemodus, wobei die Vorrichtung überprüft, ob die Gesamtheit der Elemente, die sie bilden (Sendekreis, Empfangskreis, Kommunikationskreis, Batterie) sowie die Wandler, mit denen sie verbunden sind, funktionsfähig sind.

12. Verfahren nach Anspruch 11, umfassend einen Schritt des Umschaltens in den Autodiagnosemodusnach Aufforderung von dem entfernten Server.

13. Computerprogrammprodukt, wobei das Computerprogramm Code-Befehle zum Ausführen der Schritte des Verfahrens nach einem der Ansprüche 1 bis 12 umfasst, wenn das Programm auf einem Computer ausgeführt wird.

14. System mit einer Vorrichtung zur Ressourcenverwaltung für die Überwachung einer länglichen Struktur, die als elastischer Wellenleiter dienen kann, einer Vielzahl von Wandlern (1111-1, 1112-1, 1111-2, 1112-2) und einer Vielzahl von elektronischen Vorrichtungen, wobei die Struktur mit der Vielzahl von Wandlern ausgestattet ist, die in der Lage sind, Signale zu erfassen, die charakteristische Größen von elastischen Wellen messen, die sich in der Struktur ausbreiten, wobei jeder Wandler an eine der elektronischen Vorrichtungen gekoppelt ist, die entlang der Struktur installiert ist, wobei jede elektronische Vorrichtung mindestens Mittel zum Verarbeiten der von mindestens einem Wandler empfangenen Messsignale und einen Prozessor umfasst, der Codebefehle aufweist, um die Schritte des Verfahrens nach einem der Ansprüche 1 bis 12 auszuführen.

15. System zum Überwachen des Zustands von Schienenwegen, umfassend eine Vielzahl der Systeme nach Anspruch 14.

## Claims

1. A method for managing resources for monitoring an elongated structure capable of acting as a resilient waveguide, the structure being instrumented with a plurality of transducers capable of acquiring signals measuring characteristic quantities of elastic waves propagating through the structure, with each transducer being coupled to an electronic device installed along the structure, with each electronic device at least comprising means for processing the measurement signals received from at least one transducer and a processor having code instructions for implementing steps of:
- initialise (302) the electronic device in nominal mode, with said nominal mode allowing an inspection of the elongated structure to be initiated by means of a local analysis of elastic waves generated when a mobile device passes in the vicinity of a transducer to which the electronic device is coupled, or initialising (304) the electronic device in detection mode, with said detection mode allowing an emission of elastic waves in the elongated structure to be initiated by a transducer to which the electronic device is coupled and allowing an inspection of the elongated structure to be carried out by means of a local analysis of signals originating from the emitted elastic waves;
- determining if an anomaly has been detected during the inspection in nominal mode and, if so, either maintaining the nominal mode or switching (304) the electronic device to detection mode in order for an emission of elastic waves in the elongated structure to be initiated by a transducer to which the electronic device is coupled and for an inspection of the elongated structure to be carried out by means of a local analysis of signals originating from the emitted elastic waves;
- determining if a fault has been detected while inspecting in detection mode and, if so, either maintaining the detection mode or switching (306) the electronic device to survey mode, with said survey mode allowing said electronic device to transmit data from signals originating from the elastic waves emitted in said structure during the inspection in detection mode to a remote server to generate a more in-depth analysis.

2. The method according to claim 1, wherein the step of initialising the device in nominal mode consists, at least, in deactivating the high voltage components, the Global Navigation Satellite System, i.e. GNSS, and the GSM communication.

3. The method according to claim 1 or 2, comprising, before the step of switching the electronic device to detection mode, a step of determining the time 'Td' that elapses between an increase in the average noise level in said elongated structure and the passage of a mobile device in the vicinity of a transducer.

4. The method according to claim 3, comprising a step of waking-up electronic devices neighbouring said electronic device if the time 'Td' corresponds to a reduction with respect to a recorded minimum value.

5. The method according to any one of claims 1 to 4, wherein the step of switching the electronic device to detection mode comprises a step of activating the high voltage components in order to power the amplifiers to emit elastic waves and of activating the GNSS to synchronise said device with the neighbouring electronic devices.

6. The method according to any one of claims 1 to 5, wherein the step of inspecting said elongated structure by means of a local analysis of signals originating from emitted elastic waves comprises a step of determining whether electronic devices neighbouring said electronic device receive the emitted waves.

7. The method according to claim 6, comprising the following steps of:
- sending an analysis report to the remote server if said transmitter device has received the waves emitted by the neighbouring electronic devices, and returning to the nominal mode; or
- sending a warning message to the remote server if said device has not received waves emitted by the neighbouring electronic devices, and switching to the survey mode or maintaining the detection mode.

8. The method according to any one of claims 1 to 7, wherein the step of transmitting data from signals originating from elastic waves emitted in said elongated structure to the remote server involves sending the data via a GSM or wired communication.

9. The method according to claim 8, further comprising a step of switching the electronic device to the nominal mode after sending the data.

10. The method according to any one of claims 1 to 9, comprising a step of switching the electronic device from the nominal mode to the detection mode or to the survey mode upon request from the remote server or according to a predefined frequency.

11. The method according to any one of claims 7 or 8, comprising a step of switching the electronic device from the nominal mode or from the detection mode or from the survey mode to a self-diagnosis mode wherein said device checks that all its constituent elements (transmission, reception, communication circuits, the battery), as well as the transducers connected thereto, are functional.

12. The method according to claim 11, comprising a step of switching to the self-diagnosis mode upon request from the remote server.

13. A computer program product, with said computer program comprising code instructions for carrying out the steps of the method according to any one of claims 1 to 12, when said program is executed on a computer.

14. A system with a device for managing resources for monitoring an elongated structure capable of acting as an elastic waveguide, a plurality of transducers (1111-1, 1112-1, 1111-2, 1112-2) and a plurality of electronic devices, with the structure being instrumented with a plurality of transducers capable of acquiring signals measuring characteristic quantities of elastic waves propagating through the structure, with each transducer being coupled to one of the electronic devices installed along the structure, with each electronic device comprising at least means for processing the measurement signals received from at least one transducer and a processor having code instructions for implementing the steps of the method according to any one of claims 1 to 12.

15. A system for monitoring the condition of railway tracks comprising a plurality of the systems according to claim 14.
